(19) Europäisches Patentamt / European Patent Office / Office européen des brevets

(11) **EP 3 190 154 A1**

(12) **EUROPEAN PATENT APPLICATION**
published in accordance with Art. 153(4) EPC

(43) Date of publication:
**12.07.2017 Bulletin 2017/28**

(21) Application number: **15838936.1**

(22) Date of filing: **31.08.2015**

(51) Int Cl.:
*C08L 59/02* (2006.01)      *C08K 3/10* (2006.01)
*C08K 3/30* (2006.01)      *C08L 23/00* (2006.01)

(86) International application number:
**PCT/KR2015/009132**

(87) International publication number:
**WO 2016/036088 (10.03.2016 Gazette 2016/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **05.09.2014 KR 20140118956**

(71) Applicant: **Korea Engineering Plastics Co., Ltd.
Seoul 04144 (KR)**

(72) Inventors:
• **PARK, Seung Chin**
  **Seoul 06292 (KR)**
• **BYUN, Gyung Seob**
  **Seongnam-si**
  **Gyeonggi-do 13608 (KR)**
• **LEE, Ji Young**
  **Gunpo-si**
  **Gyeonggi-do 15823 (KR)**

(74) Representative: **Bassil, Nicholas Charles et al
Kilburn & Strode LLP
20 Red Lion Street
London WC1R 4PJ (GB)**

(54) **ACETAL RESIN COMPOSITION**

(57)    Provided is an acetal resin composition including (a) polyoxymethylene, (b) barium sulfate, and (c) metallic stearate to thereby have an excellent radiation shield property, be easily detected by an X-ray detector, and prevent plastic contamination of food or medicine.

EP 3 190 154 A1

**Description**

**Technical Field**

The present invention relates to an acetal resin composition. More particularly, the present invention relates to an acetal resin composition having improved thermal stability and friction wear resistance, and excellent detection performance.

**Background Art**

Food or medicine are mostly exposed to plastic in processes such as a manufacturing process, a package process, a transferring process, and the like. For example, food or medicine may be contaminated from a plastic component or a fragment of the plastic component in a manufacturing process line, and sometimes, a product contaminated by plastic, or the like, is discovered. This causes recall cost of the product, court cost, deterioration of product reliability, and it takes a long time and large cost to recover consumer confidence.

Since it is impossible to detect plastic capable of contaminating food using a detector such as a metal detector, an X-ray detector, or the like, it was a long task to find a solution for a plastic contamination problem.

Therefore, research into a detection additive for confirming whether to detect plastic contamination before a final product reaches a consumer, while maintaining safety and quality of food has been conducted.

U.S. Patent Application Publication No. 6,113,482 (Patent Document 1) discloses a method of adding stainless steel, or the like, to a plastic film wrap as a filler so that a fraction may be detected in food. In this method, a metal may be detected using a metal detector, but there is a limitation in that the film should be manufactured to be large so that the film may contain a metal material equivalent thereto. In addition, it is difficult to commercially manufacture the film due to a particle size of stainless steel, an irregular particle shape, wear characteristics of the particle, and the like.

U.S. Patent Application Publication No. 6,177,113 (Patent Document 2) discloses a method of increasing a ratio of particles to increase a detection rate, but in this method, there are problems in that metal particles are expensive, and a contamination risk due to stainless steel particles may be increased.

Meanwhile, there is a detection method using radiation such as X-ray. In this method, which is a method using a detector using radiation by allowing a resin composition to contain a material to be detected, barium sulfate may be used. In this case, as barium sulfate to be contained, barium sulfate having a large particle size is used or a high content of barium sulfate is used, and thus, there are problems in that thermal stability of a resin may be deteriorated, and processability and productivity may be deteriorated. Further, a working environment is not good due to emission of harmful gas such as formaldehyde caused by pyrolysis.

As described above, in the case of a detectable film, plastic contamination of food may be detected, but there are problems in that there is a need to adjust a size, a shape, or the like, of particles to be detected or significantly increase a content thereof, and a contamination risk may be further increased or plastic contamination may not be detected due to a loss of the contained particles to be detected.

**Disclosure**

**Technical Problem**

An object of the present invention is to provide an acetal resin composition capable of preventing plastic contamination of food or medicine and being easily detected by radiation.

Another object of the present invention is to provide an acetal resin composition capable of significantly improving thermal stability so as to prevent processability and productivity from being deteriorated due to pyrolysis of an acetal resin and prevent emission of harmful gas such as formaldehyde, and capable of significantly increasing workability and productivity.

Another object of the present invention is to provide an acetal resin composition capable of decreasing friction heat generated between an acetal resin and barium sulfate particles to decrease an emission amount of harmful materials, capable of implementing improved friction wear resistance to prevent the particles from being lost by wear at the time of using or driving a product, and capable of significantly decreasing a contamination risk of food or medicine due to separated particles.

**Technical Solution**

In one general aspect, an acetal resin composition contains (a) polyoxymethylene, (b) barium sulfate, and (c) metallic stearate.

The acetal resin composition may further contain (d) a polyolefin based compound.

The acetal resin composition may contain 0.05 to 10 parts by weight of the metallic stearate (c) based on 100 parts by weight of a base resin composed of polyoxymethylene (a) and barium sulfate (b).

The acetal resin composition may contain 0.05 to 10 parts by weight of the polyolefin based compound (d) based on 100 parts by weight of the base resin composed of polyoxymethylene (a) and barium sulfate (b).

The metallic stearate may be any one or more selected from calcium stearate, iron stearate, aluminum stearate, copper stearate, lithium stearate, magnesium stearate, sodium stearate, zinc stearate, barium stearate, and a mixture thereof.

The polyolefin based compound may include maleic anhydride-modified polyolefin based resins in which maleic anhydride is grafted onto at least one polyolefin based resins selected from a polyolefin elastomer, ethylene vinyl acetate, ethylene alkyl acrylate, linear low-density polyethylene, and high-density polyethylene.

The maleic anhydride may be contained in a content of 0.1 to 10 wt% based on a total weight of the maleic anhydride-modified polyolefin based resin.

Barium sulfate may have an average particle diameter of 0.1 to 100$\mu$m.

The acetal resin composition may further contain metal particles.

The acetal resin composition may contain any one or a mixture of two or more selected from the group consisting of an antioxidant, a formaldehyde or formic acid removing agent, a thermal stabilizer, a lubricant, an impact modifier, an antibiotic, a processing aid, a filler, a colorant, a release agent, an antistatic agent, a flame retardant, a reinforcing agent, a photostabilizer, a pigment, an anti-friction agent, and an anti-wear agent.

In another general aspect, there is provided a molded product manufactured from the acetal resin composition as described above.

**Advantageous Effects**

An acetal resin composition according to the present invention may suppress degradation of a resin and decrease extruder torque and friction heat generated between an acetal resin and ingredient particles in the composition at the time of processing to significantly decrease decomposition of the acetal resin sensitive to heat, thereby making it possible to significantly increase thermal stability. Further, the acetal resin composition may significantly decrease emission of organic volatile material due to excellent thermal stability, such that the acetal resin composition may suppress mechanical properties of a final resin product from being deteriorated by decomposition of the acetal resin and have excellent moldability and surface characteristics while improving workability and productivity.

Further, the acetal resin composition according to the present invention has advantages in that since it has excellent friction wear resistance, at the time of applying and using the acetal resin composition in a product, the acetal resin composition may prevent contamination by fragments caused by wear, such that the acetal resin composition may be safely applied to products affecting a human body, and the like, in addition to food or medicine, and the acetal resin composition may be widely used in various industrial fields.

**Best Mode**

Hereinafter, an acetal resin composition according to the present invention will be described in detail. The exemplary embodiments of the present invention to be described below are provided by way of example so that the idea of the present invention can be sufficiently transferred to those skilled in the art to which the present invention pertains. In addition, technical terms and scientific terms used in the present specification have the general meaning understood by those skilled in the art to which the present invention pertains unless otherwise defined, and a description for the known function and configuration obscuring the present invention will be omitted in the following description.

The acetal resin composition according to the present invention may contain (a) polyoxymethylene, (b) barium sulfate, and (c) metallic stearate.

Hereinafter, each of the ingredients will be described in more detail.

(a) Polyoxymethylene (Acetal Resin)

In the present invention, an acetal resin (hereinafter, referred to as "POM" or "polyoxymethylene") is a polymer having oxymethylene repeating unit, and may be a homopolymer having the oxymethylene repeating unit, an oxymethylene-oxyalkylene copolymer, or a mixture thereof.

The homopolymer may be prepared by polymerizing formaldehyde or a cyclic oligomer thereof, for example, trioxane.

The copolymer may be prepared by polymerizing formaldehyde or a cyclic oligomer thereof with alkylene oxide or cyclic formal, for example, 1,3-dioxolane, diethylene glycol formal, 1,4-propanediol formal, 1,4-butanediol formal, 1,3-dioxepane formal, 1,3,6-trioxocane, or the like.

It is preferable to use at least one selected from monomers such as ethylene oxide, 1,3-dioxolane, 1,4-butandiol formal, and the like. An oxymethylene copolymer having a melting point of 150°C or more and having two or more combined carbon atoms in a main chain may be prepared by adding these monomers to trioxane or formaldehyde, which is a main monomer, and randomly copolymerizing these monomers using Lewis acid as a catalyst. In the case of using the copolymer, an amount of a comonomer may be 20 wt% or less, preferably 15 wt% or less, and more preferably, 4 to 5 wt%.

The homopolymer or copolymer may be stabilized by capping terminal groups thereof through esterification or etherification.

The acetal resin (polyoxymethylene) used in the composition according to the present invention may be a branched type or a linear type, and a polyoxymethylene homopolymer or oxymethylene-oxyethylene copolymer having a melting point of about 150°C or more, a crystallinity of 65 to 85%, and a weight average molecular weight of 10,000 to 200,000 g/mol, preferably, 20,000 to 90,000 g/mol, and more preferably, 25,000 to 70,000 g/mol may be used. The weight average molecular weight may be measured by gel-permeation chromatography in m-cresol using a DuPont PSM bimodal column kit having a nominal pore size of 60 to 1000 Å.

The acetal resin may have a melt flow index in a range of 0.1 to 100 g/10 min, preferably, 0.5 to 60 g/10 min, and more preferably, 0.8 to 40 g/10 min, for injection molding. In the present specification, the melt flow index is measured at 190°C/2.16kg according to ISO 1133 standard. The range of the melt flow index may be adjusted depending on other structures and processes such as a film, fiber, and blow molding.

As a commercial example of the polyoxymethylene, KEPITAL produced by Korean Engineering Plastics Co., Ltd. may be used, but the acetal resin is not limited thereto.

The acetal resin according to the present invention may be used in an amount of 20 to 99 wt%, preferably, 40 to 95 wt%, and more preferably, 70 to 90 wt% based on the total weight of the composition. In the case in which the amount of the acetal resin satisfies the above-mentioned range, excellent thermal stability and mechanical properties may be implemented by a combination with other ingredients, and at the same time, detection performance may be improved.

(b) Barium Sulfate

Barium sulfate ($BaSO_4$), which is tasteless, odorless, colorless, and stable in air, and is a radiopaque material that is not harmful to a human body, has been used as an X-ray contrast agent, that is, a shielding material, particularly, a contrast agent in the digestive system.

Barium sulfate has excellent capability of being detected by radiation such as X-ray. However, in order to implement contrast of X-ray, the acetal resin composition needs to contain a high content of barium sulfate. This promotes pyrolysis of the acetal resin in the resin composition. Pyrolysis of the resin composition as described above may deteriorate moldability and productivity. Further, organic volatile materials such as formaldehyde are emitted due to pyrolysis, thereby worsening a working environment and a usage environment. Therefore, the present invention may implement excellent thermal stability, processability, and productivity while increasing capability of being detected by radiation through a suitable content of barium sulfate and a combination with other ingredients in the composition.

For thermal stability, barium sulfate subjected to surface coating treatment may be applied, but there are an effect of improving thermal stability is insufficient, and productivity and processability may be deteriorated due to surface coating treatment. Therefore, it is preferable to use barium sulfate that is not subjected to surface coating treatment. The acetal resin composition according to the present invention may significantly increase thermal stability and implement excellent friction wear resistance, moldability, mechanical properties, and high-quality exterior by recognizing the above-mentioned problems and , significantly decreasing extruder torque and friction heat generated between ingredient particles in the composition by a configuration combination including barium sulfate, polyoxymethylene, and metallic stearate.

In the present invention, barium sulfate may implement metal detection characteristics caused by metal particles. The acetal resin composition according to the present invention may simultaneously use barium sulfate and metal particles, thereby making it possible to implement a synergic effect on characteristics of the metal as a detection target. That is, in the case of additionally containing the metal particles in addition to barium sulfate, there are advantageous in that since the metal particles may also be x-ray opaque, detection sensitivity in an X-ray detector may be improved, and the acetal resin composition may be detected using a metal detector.

The metal particles are not particularly limited, but iron, copper, nickel, cobalt, molybdenum, an alloy thereof, or the like, may be used. However, any metal particles may be used without limitation as long as they may be detected. Preferably, stainless steel that is hardly affected by external factors such as moisture, and the like, may be used, but the metal particles are not limited thereto, but may be changed depending on an application field.

The metal particles may be in a powder form in order to increase adhesion with the acetal resin, which is a matrix resin, and improve detection performance. The powder-form metal particles may improve dispersibility in the resin composition and increase adhesion with the acetal resin, which is the matrix resin. Further, the metal particles may have an average particle diameter of 0.1 to 10,000 $\mu$m, preferably, 5 to 8,000 $\mu$m. The average particle diameter of the metal particles is more than 10,000 $\mu$m, which is disadvantageous in dispersion and deteriorates physical properties, and a degree of dispersion is not uniform as compared to metal particles having a small particle diameter when the content of the metal particles are the same as each other, such that detection may be missed. In addition, when the average particle diameter of the metal particles is less than 0.1 $\mu$m, a working environment may not be good, and cost may be increased.

The acetal resin composition according to the present invention contains the base resin composed of the acetal resin and barium sulfate. Here, a content of barium sulfate may be 1 to 80 wt%, preferably, 5 to 50 wt%, and more preferably 10 to 30 wt% based on a total weight of the base resin. When the content of barium sulfate is more than 80 wt%, thermal stability and mechanical properties may be deteriorated, and barium sulfate may be separated due to fragments by wear in use, which may deteriorate radiopacity and be mixed with and contained in food, medicine, or the like, to increase a contamination risk. Further, when the content of barium sulfate is less than 1 wt%, x-ray opacity of the acetal resin composition may be insufficient, such that detection performance by the X-ray detector may be deteriorated.

As the barium sulfate, barium sulfate particles having an average particle diameter of 0.1 $\mu$m to 100 $\mu$m, preferably 1 $\mu$m to 10 $\mu$m may be used. The average particle diameter of barium sulfate is more than 100 $\mu$m, which is disadvantageous in dispersion and deteriorates physical properties, and a degree of dispersion is not uniform as compared to barium sulfate particles having a small particle diameter when the contents of the barium sulfate are the same as each other, such that detection may be missed. In addition when the average particle diameter of the barium sulfate particles is less than 0.1 $\mu$m, an injection property and a working environment may not be good due to micro-dust, and cost may be increased.

(c) Metallic Stearate

In the present invention, as the metallic stearate, a divalent metal may be used. The metallic stearate may be any one or more selected from magnesium stearate (Mg-St), calcium stearate (Ca-St), zinc stearate (Zn-St), aluminum stearate (Al-St), lithium stearate, sodium stearate, barium stearate, and a mixture thereof. Since thermal stability may be significantly improved, it is preferable to use calcium stearate.

The metallic stearate may significantly improve thermal stability of the resin composition by a combination with polyoxymethylene and barium sulfate. Here, a content of the metallic stearate may be 0.05 to 10 parts by weight, preferably 0.5 to 5 parts by weight, and more preferably 1 to 3 parts by weight based on 100 parts by weight of the base resin composed of polyoxymethylene and barium sulfate. When the content of the metallic stearate is less than 0.05 parts by weight, an effect of improving thermal stability may be insufficient, and when the content of the metallic stearate is more than 10 parts by weight, mechanical properties may be deteriorated, and migration may occur.

Further, the metallic stearate may implement a synergic effect of simultaneously improving dispersibility and thermal stability by a combination with a polyolefin based compound capable of being added to the resin composition according to the present invention. Further, friction wear resistance of the resin composition may be improved by the combination, such that friction heat generated between polyoxymethylene and barium sulfate may be decreased. Therefore, thermal stability may be significantly improved, such that an emission amount of organic volatile materials, for example, formaldehyde, which may be generated at the time of processing may be significantly decreased.

(d) Polyolefin based Compound

In the present invention, the polyolefin based compound may improve friction wear resistance of the resin composition by a combination with other ingredients. This may prevent generation of wear fragments of a molded product capable of being generated in a manufacturing process or in use. Particularly, in the case of the resin composition applied to food or medicine to implement capability of being detected, a contamination risk of the food or medicine due to separated particles, for example, plastic contaminated in the food, or the like, may be significantly decreased. The polyolefin based compound may decrease a dynamic friction coefficient and wear rate while minimizing deterioration of physical properties even with a small amount, thereby making it possible to significantly improve friction wear resistance of the resin composition.

As the polyolefin based compound, at least one polyolefin based resins selected from a polyolefin elastomer, ethylene vinyl acetate, ethylene alkyl acrylate, linear low-density polyethylene, and high-density polyethylene may be used. Preferably, a maleic anhydride-modified polyolefin based resin may be used. As the maleic anhydride-modified polyolefin based resin, more preferably, a maleic anhydride-modified polyolefin based elastomer may be used.

In the polyolefin based compound, a content of maleic anhydride may be 0.1 to 10 wt%, preferably, 0.5 to 5 wt% based on a total weight of the maleic anhydride-modified polyolefin based resin. When the content is less than 0.1 wt%, an effect of improving friction wear resistance may be insufficient, and when the content is more than 10 wt%, physical properties of the resin may be deteriorated.

In the present invention, the polyolefin based compound may be used in a content of 0.05 to 10 parts by weight, and preferably 0.1 to 3 parts by weight based on 100 parts by weight of the base resin composed of the acetal resin and barium sulfate. When the content of the polyolefin based compound is less than 0.05 parts by weight, an effect of improving dispersibility, friction wear resistance, and thermal stability may be insufficient. Further, when the content was more than 10 parts by weight, mechanical properties and moldability may be deteriorated.

(e) Stabilizer

The acetal resin composition according to the present invention may further contain a sterically hindered phenolic compound as a stabilizer. The stabilizer may decrease emission of the organic volatile materials by a combination with other ingredients, and improve thermal stability, surface characteristics, and moldability. Further, a synergic effect of improving friction wear resistance and thermal stability may be implemented by a configuration combination further containing the polyolefin based compound.

Examples of the sterically hindered phenolic compound may include triethylene glycol bis[3-(3-t-butyl-5-methyl-4-hydroxyphenyl)propionate], pentaerithrityl-tetrakis[3-(3,5-di-t-butyl-4-hydroxyphenyl)propionate], 2,2-dio-diethylenebis[3-(3,5-di-t-butyl-4-hydroxyphenyl)propionate], N,N'-hexamethylene bis(3,5-di-t-butyl-hydroxy amide), 1,3,5-trimethyl-2,4,6-tris(3,5-di-t-butyl-4-hydroxybenzyl)benzene, 1,6-hexanediol-bis[3-(3,5-di-t-butyl-4-hydroxyphenyl)propionate], 2,4-bis-(n-octylthio)-6-(4-hydroxy-3,5-di-t-butylanilino)-1,3,5-triazine, octadecyl-3-(3,5-di-t-butyl-4-hydroxyphenyl)propionate, 2,2-thiobis(4-methyl-6-t-butylphenol), 3,5-di-t-butyl-4-hydroxybenzylphosphonatediethylester, 1,3,5-tris(4-t-butyl-3-hydroxy-2,6-dimethylbenzyl)isocyanuric acid, 1,1,3-tris(2-methyl-4-hydroxy-5-t-butylphenyl)butane, 1,1-bis(2-methyl-4-hydroxy-5-t-butylphenyl)butane, 2,2'-methylenebis(4-methyl-6-t-butylphenol), N,N'-bis[3-(3,5-di-t-butyl-4-hydroxyphenyl)propionyl]hydrazine, and the like, but are not limited thereto.

The stabilizer may be used in a content of 0.01 to 10 parts by weight, preferably, 0.05 to 5 parts by weight, and more preferably, 0.1 to 2 parts by weight based on 100 parts by weight of a base resin composed of the acetal resin and barium sulfate. Within the above-mentioned range, thermal stability and moldability of the resin composition may be improved, and emission of the organic volatile materials may be suppressed by a combination with other ingredients.

(F) Additive

According to the present invention, if necessary, the acetal resin composition may further include an additive generally used in the art. More specifically, the acetal resin composition may contain an antioxidant, a formaldehyde or formic acid removing agent, a thermal stabilizer, a lubricant, an impact modifier, an antibiotic, a processing aid, a filler, a colorant, a release agent, an antistatic agent, a flame retardant, a reinforcing agent, a photostabilizer, a pigment, an anti-friction agent, an anti-wear agent, and the like. As an example, a thermal stabilizer such as hydrazide based compound or urea based compound may significantly decrease emission of the organic volatile materials such as formaldehyde, or the like, such that the acetal resin composition may further include the thermal stabilizer.

The acetal resin composition according to the present invention may further contain a thermal stabilizer selected from the group consisting of nitrogen-containing compounds and formic acid scavengers, the nitrogen-containing compound being selected from the group consisting of amino-substituted triazine compounds, condensates thereof with formaldehyde, amide compounds, urea and derivatives thereof, imidazole compound, imide compounds, polyamide compound, and hydrazide compounds.

Examples of the amino-substituted triazine compounds or the condensates thereof with formaldehyde may include melamine, N-butyl melamine, N-phenyl melamine, N, N-diphenyl melamine, N, N-diallyl melamine, N, N', N''-triphenyl melamine, N, N', N''-trimethylol melamine, benzoguanamine, 2,4-diamino-6-methyl-sym-triazine, 2,4-diamino-6-butyl-sym-triazine, 2,4-diamino-6-benzyl oxy-sym-triazine, 2,4-diamino-6-butoxy-sym-triazine, 2,4-diamino-6-cyclohexyl-sym-triazine, 2,4-diamino-6-chloro-sym-triazine, 2,4-diamino-6-mercapto-sym-triazine, or condensate thereof with formaldehyde.

Examples of the amide compounds may include polycarboxylic acid amide such as isophthalic acid diamide, or the like, anthranyl amide, and the like.

Examples of the urea and urea derivative compounds may include N-substituted urea, urea condensates, ethylene urea, hydantoin compounds, ureide compounds, and the like.

Examples of the imidazole compounds may include 1-methylimidazole, 2-methylimidazole, 1,2-dimethylimidazole, 2-phenylimidazole, and the like, and examples of the imide compounds may include succinimide, glutarimide, phthalimide, and the like.

Examples of the polyamide compounds may include polyamide resins such as nylon 46, nylon 6, nylon 66, nylon610, nylon 612, nylon 12, and the like, and polymers thereof.

Examples of the hydrazide compounds may include aliphatic carboxylic acid hydrazide based compounds such as stearic acid hydrazide, 12-hydroxy stearic acid hydrazide, sebacic acid dihydrazide, dodecanedioic acid dihydrazide, eicosanedioic acid dihydrazide, or the like; an alicyclic carboxylic acid hydrazide based compound such as 1,3-bis(hydrazinocarbonoethyl)-5-isopropyl hydantoin, or the like; an aromatic carboxylic acid hydrazide based compound such as 1-naphthoic acid hydrazide, 2-naphthoic acid hydrazide, isophthalic acid dihydrazide, 2,6-naphthalenedicarboxylic acid dihydrazide, or the like; hetero atom-containing carboxylic acid hydrazide based compound; and the like.

Examples of the formic acid scavengers may include hydroxides of alkali metals or alkali earth metals, inorganic acid salts, carboxylates, or alkoxides. Examples of the formic acid scavengers may include hydroxides of sodium, potassium, magnesium, calcium, barium, or the like, and carbonates, phosphate, silicates, borates, and carboxylates of said metals. Specific examples of saturated or unsaturated aliphatic carboxylate may include calcium dimyristate, calcium dipalmitate, calcium distearate, calcium (myristate-palmitate), calcium (myristate-stearate), calcium (palmitate-stearate), and preferably, calcium dipalmitate or calcium distearate.

The acetal resin composition according to the present invention may further contain the lubricant. As the lubricant, alkyl acid amide, bis-fatty acid amide, ionic surfactant lubricant, hydrocarbon wax, chlorohydrocarbon, fluorocarbon, oxy-fatty acid, ester, polyalcohol, silicon, or the like, may be preferably used.

The acetal resin composition according to the present invention may further contain the impact modifier. Examples of the impact modifier may include thermoplastic polyurethane, a polyester polyether elastomer, a core-shell acrylate polymer, and the like.

The acetal resin composition according to the present invention may further contain the photostabilizer. Examples of the photostabilizer may include a hindered amine based photostabilizer, a benzotriazole based UV absorber, benzophenone, aromatic benzoate, cyano acrylate, oxalic acid anilide, and the like.

The acetal resin composition according to the present invention may further contain the filler. As the filler, any one or more selected from inorganic fibers for example, glass fiber, carbon fiber, silicon fiber, silica·alumina fiber, zirconium oxide fiber, boron fiber, potassium titanate fiber, fibers of metals such as stainless steel, aluminum, titanium, copper, brass, and the like, potassium titanate whisker having a short fiber length, zinc oxide whisker-, carbon black, carbon nanotube, graphite, silica, quartz powder, glass beads, glass powder, calcium silicate, aluminum silicate, kaolin, clay, diatomite, wollastonite, iron oxide, titanium oxide, alumina, calcium sulfate, magnesium sulfate, barium sulfate, magnesium carbonate, calcium carbonate, silicon carbide, silicon nitride, metal powder, mica, glass piece, metal foil, glass balloon, silica balloon, Shirasu balloon, metal balloon, and the like, may be used. Further, the fillers that are surface-treated, or are not surface-treated may be used without limitation.

The acetal resin composition according to the present invention may further contain the pigment, for example, an inorganic pigment, an organic pigment, a metallic pigment, a fluorescent or luminous pigment, or the like.

The additive may be used in a range in which the additive does not substantially have a negative influence on physical properties of the composition according to the present invention.

Further, in the acetal resin composition according to the present invention, any one selected from polytetrafluoroethylene, calcium carbonate, wollastonite, silicon based compounds, and a mixture thereof may be used for friction resistance and wear resistance.

The resin composition according to the present invention may be prepared by a method known in the art. For example, the acetal resin composition may be prepared in a pellet form by simultaneously mixing the ingredients according to the present invention and other additives and then melting extruding the mixture in an extruder.

As an example of a preparation method of the acetal resin composition according to the present invention, a mixture in which polyoxymethylene, the metal particles, and the polyolefin based compound are mixed may be put into a main feeder of an extruder, be melted, extruded, and then processed. Here, a process of putting the mixture into the main feeder of the extruder and melting the mixture may be performed at 160 to 240°C.

In the preparation method of the acetal resin composition, a kneader such as a single-screw or multi-screw kneading extruder, a roll, a Banbury mixer, or the like, may be used. Preferably, a twin-screw extruder provided with a decompression device and a side feeder may be used.

In the present invention, the preparation method of the acetal resin composition includes melting and kneading the ingredients of the acetal resin composition according to the present invention using the above-mentioned kneader. The melting and kneading method may include a method of simultaneously melting and kneading all ingredients, a method of melting and kneading a preliminarily mixed mixture, or a method of sequentially supplying each of the ingredients or supplying each of the ingredients from the side feeders in the middle of a barrel of the extruder to melt and knead the mixture.

Here, a decompression degree of the extruder is not limited, but may be preferably 0 to 0.1 MPa. Further, a melting and kneading temperature may be preferably 1 to 100°C higher than a melting point of the acetal resin measured by differential scanning calorimetry (DSC) according to JIS K7121. Preferably, the melting and kneading temperature may be 170 to 240°C. Further, a shear rate of the kneader may be preferably 100 rpm or more, and an average residence time at the time of kneading may be preferably 30 seconds to 1 minute.

A molded product manufactured using the acetal resin composition according to the present invention may be manufactured by an arbitrary method known to those skilled in the art, for example, an extrusion method, an injection molding method, a compression molding method, a blow molding method, a heat molding method, a rotational molding method, or a melting casting method.

Hereinafter, Examples will be provided in order to describe the present invention in more detail. However, the present invention is not limited to the following Examples.

Specifications of each of the ingredients used in the following Examples and Comparative Examples are as follows.

(A) Polyoxymethylene: KEPITAL F20-03 (1.41g/cm3, melt index: 9 g/10min (ISO 1133, 190°C /2.16kg), melting point: 165°C, heat deflection temperature (1.8 MPa): 100°C) was used.

(B) Barium sulfate: average particle diameter: 1.1 $\mu$m, specific gravity: 4.39, oil absorption (ASTM D-281): 13 lbs oil/100 lbs, Compacted Bulk Density (lbs/ft3, ASTM C-110): 90 lbs/ft$^3$

(C1) Calcium stearate: SONGSTAB SC-110 (Songwon Industrial Co., Ltd), melting point: 152.5 °C, weight average molecular weight (Mw): 572 g/mol, Ca content: 7 wt%

(C2) Magnesium stearate: SONGSTAB SM-310 (Songwon Industrial Co., Ltd), melting point: 130 °C, weight average molecular weight (Mw): 572 g/mol, Mg content: 4.6 wt%

(D1) Polyolefin Elastomer: ethene-1-octene copolymer, density: 0.902g/cm$^3$ (ASTM D-792), melt index: 3.0 g/10min (ISO 1133, 190°C/2.16kg), Vicat softening point: 85°C (ASTM 1525)

(D2) ethylene methyl acrylate copolymer (EMA): methyl acrylate content: 24wt%, density: 0.944 g/cm$^3$ (ISO 1183), melt index: 20 g/10min (ISO 1133, 190°C/2.16kg)

(D3) Ethylene vinyl acetate copolymer (EVA): vinylacetate content: 28 wt%, density: 0.950 g/cm$^3$ (ASTM 1505), melt index: 4.0 g/10min (ASTM D1238, 190°C/2.16kg), softening point: 44°C (ASTM 1525)

[Examples 1 to 6]

After preparing a mixture so as to have ingredients and contents illustrated in the following Table 1, the mixture was put into and compounded in a hopper of a twin-screw compounding machine (JSW Co., Ltd (JAPAN)). A screw rate of the twin-screw compounding machine at a temperature of 160 to 240°C was 180 rpm, and a discharge amount thereof was 16 kg/hr. The resin composition prepared as described above was injected through an injection molding machine (electric injection molding machine (Fanac Co., Ltd.), injection speed: 20 mm/s, injection pressure: 700 kgf, measure: 50 mm, cooling time: 10 sec, mold temperature 80°C), thereby molding a test sample.

Thermal stability of the manufactured test sample was measured, and the results were illustrated in the following Table 2.

[Example 7]

A test sample was manufactured by the same method as in Example 1 except for further using the polyolefin elastomer (D1) so as to have ingredients and contents illustrated in the following Table 1.

[Example 8]

A test sample was manufactured by the same method as in Example 7 except for using the ethylene methyl acrylate copolymer (D2) so as to have ingredients and contents illustrated in the following Table 1 instead of the polyolefin elastomer (D1).

[Example 9]

A test sample was manufactured by the same method as in Example 7 except for using the ethylene vinyl acetate copolymer (D3) so as to have ingredients and contents illustrated in the following Table 1 instead of the polyolefin elastomer (D1).

[Example 10]

A test sample was manufactured by the same method as in Example 7 except for further using the ethylene methyl acetate (D2) so as to have ingredients and contents illustrated in the following Table 1.

[Example 11]

A test sample was manufactured by the same method as in Example 2 except for using the magnesium stearate (C2) so as to have ingredients and contents illustrated in the following Table 1 instead of the calcium stearate (C1).

[Example 12]

A test sample was manufactured by the same method as in Example 1 except for changing a content of barium sulfate to 55 wt%.

[Comparative Examples 1 and 2]

Test samples were manufactured by the same method as in Example 1 so as to have ingredients and contents illustrated in the following Table 1.

(Evaluation)

(1) Thermal Stability (VDA275 test)

A molded product having a size of 100 mm x 40 mm x 2 mm was fixed in a 1 L bottle filled with 50 ml of water so as not to contact water, and then sealed. After the bottle installed as described above was kept at 60°C for 3 hours, a content of $CH_2O$ captured in water was analyzed using a UV spectrophotometer, thereby measuring a generation amount of $CH_2O$ of the molded product. The smaller the measured value, the more excellent the thermal stability.

(2) Friction Wear Resistance

After injection molding a through-type test sample having an outer diameter of 25.6 mm, an inner diameter of 20 mm, and a height of 15mm, the test sample was fixed to a tester (a trust type friction and wear tester), and a test was performed under driving conditions at which a pressure load was 6.6 kgf and a linear velocity was 10 cm/s. Here, a dynamic friction coefficient and a specific wear rate were calculated using the following Equation, thereby evaluating friction wear resistance. The smaller the dynamic friction coefficient and the specific wear rate, the more excellent the friction wear resistance (provided that, a test time was 2 hours).

* Dynamic friction coefficient = (frictional force (kgf)x10cm))/(pressure load (kgf)x1.14cm))

* Specific wear rate = weight loss (mg)/ (density (mg/mm$^3$)× pressure load (kgf)×traveled distance (km))

[Table 1]

| Classification | Example 1 | Example 2 | Example 3 | Example 4 | Example 5 | Example 6 | Example 7 | Example 8 | Example 9 | Example 10 | Example 11 | Example 12 | Comparative Example 1 | Comparative Example 2 |
|---|---|---|---|---|---|---|---|---|---|---|---|---|---|---|
| (A) Polyoxymethylene (wt%) | 75 | 75 | 75 | 75 | 75 | 75 | 75 | 75 | 75 | 75 | 75 | 45 | 100 | 75 |
| (B) Barium sulfate (wt%) | 25 | 25 | 25 | 25 | 25 | 25 | 25 | 25 | 25 | 25 | 25 | 55 | - | 25 |
| (C1) Calcium stearate (Parts by Weight) | 0.1 | 0.3 | 0.5 | 1 | 2 | 3 | 2 | 2 | 2 | 2 | - | 2 | - | - |
| (C2) Magnesium stearate (Parts by Weight) | - | - | - | - | - | - | - | - | - | - | 0.3 | - | - | - |
| (D1) Polyolefin Elastomer (Parts by Weight) | - | - | - | - | - | - | 1.0 | - | - | 0.5 | - | - | - | - |
| (D2) EMA (Parts by Weight) | - | - | - | - | - | - | - | 1.0 | - | 0.5 | - | - | - | - |
| (D3) EVA (Parts by Weight) | - | - | - | - | - | - | - | - | 1.0 | - | - | - | - | - |

EP 3 190 154 A1

[Table 2]

| Classification | Example 1 | Example 2 | Example 3 | Example 4 | Example 5 | Example 6 | Example 7 | Example 8 | Example 9 | Example 10 | Example 11 | Example 12 | Comparative Example 1 | Comparative Example 2 |
|---|---|---|---|---|---|---|---|---|---|---|---|---|---|---|
| VDA275 (mg/kg) | 234 | 92 | 50 | 31 | 22 | 20 | 18 | 19 | 19 | 18 | 120 | 87 | 4 | × |

[Table 3]

| Classification | Example 5 | Example 7 | Example 8 | Example 9 | Example 10 | Example 12 | Comparative Example 2 |
|---|---|---|---|---|---|---|---|
| Dynamic Friction Coefficient | 0.49 | 0.34 | 0.33 | 0.34 | 0.33 | 0.56 | Decomposed (evaluation was impossible) |
| Specific Wear Rate $(mm^3/kgf.km)$ | 8.0 | 0.5 | 1.8 | 1.8 | 1.0 | 13 | Decomposed (evaluation was impossible) |

As illustrated in Table 2, in Examples according to the present invention, even though the content of barium sulfate was high, the higher the content of the metallic stearate, the more excellent the thermal stability, thereby making it possible to significantly decrease emission of organic volatile materials. On the contrary, in Comparative Example 1 in which barium sulfate was not contained, an emission amount of $CH_2O$ was low, but the test sample in Comparative Example 2 was decomposed, such that evaluation was impossible. Further, as illustrated in Table 3, it may be confirmed that in Examples 5, 7 to 10, and 12, the dynamic friction coefficient and specific wear rate were excellent, such that friction wear resistance was improved.

Hereinabove, although the present invention is described by the exemplary embodiments, they are provided only for assisting in the entire understanding of the present invention. Therefore, the present invention is not limited to the exemplary embodiments. Various modifications and changes may be made by those skilled in the art to which the present invention pertains from this description.

Therefore, the spirit of the present invention should not be limited to the above-described embodiments, and the following claims as well as all modified equally or equivalently to the claims are intended to fall within the scope and spirit of the invention.

## Claims

1.  An acetal resin composition comprising: (a) polyoxymethylene; (b) barium sulfate; and (c) metallic stearate.

2.  The acetal resin composition of claim 1, further comprising (d) a polyolefin based compound.

3.  The acetal resin composition of claim 1, wherein the acetal resin composition contains 0.05 to 10 parts by weight of the metallic stearate (c) based on 100 parts by weight of a base resin composed of polyoxymethylene (a) and barium sulfate (b).

4.  The acetal resin composition of claim 2, wherein the acetal resin composition contains 0.05 to 10 parts by weight of the polyolefin based compound (d) based on 100 parts by weight of the base resin composed of polyoxymethylene (a) and barium sulfate (b).

5.  The acetal resin composition of claim 1, wherein the metallic stearate is any one or more selected from calcium stearate, iron stearate, aluminum stearate, copper stearate, lithium stearate, magnesium stearate, sodium stearate, zinc stearate, barium stearate, and a mixture thereof.

6.  The acetal resin composition of claim 2, wherein the polyolefin based compound includes maleic anhydride-modified polyolefin based resins in which maleic anhydride is grafted onto at least one polyolefin based resins selected from a polyolefin elastomer, ethylene vinyl acetate, ethylene alkyl acrylate, linear low-density polyethylene, and high-density polyethylene.

7.  The acetal resin composition of claim 6, wherein the maleic anhydride is contained in a content of 0.1 to 10 wt% based on a total weight of the maleic anhydride-modified polyolefin based resin.

8.  The acetal resin composition of claim 1, wherein barium sulfate has an average particle diameter of 0.1 to 100μm.

9.  The acetal resin composition of claim 1, further comprising metal particles.

**10.** The acetal resin composition of claim 1, further comprising any one or a mixture of two or more selected from the group consisting of an antioxidant, a formaldehyde or formic acid removing agent, a thermal stabilizer, a lubricant, an impact modifier, an antibiotic, a processing aid, a filler, a colorant, a release agent, an antistatic agent, a flame retardant, a reinforcing agent, a photostabilizer, a pigment, an anti-friction agent, and an anti-wear agent.

**11.** A molded product comprising the acetal resin composition of any one of claims 1 to 10.

## INTERNATIONAL SEARCH REPORT

| | International application No. |
|---|---|
| | **PCT/KR2015/009132** |

**A.    CLASSIFICATION OF SUBJECT MATTER**

*C08L 59/02(2006.01)i, C08K 3/10(2006.01)i, C08K 3/30(2006.01)i, C08L 23/00(2006.01)i*

According to International Patent Classification (IPC) or to both national classification and IPC

**B.    FIELDS SEARCHED**

Minimum documentation searched (classification system followed by classification symbols)
C08L 59/02; B65B 57/10; C08K 9/12; C09C 1/36; B65D 83/14; C08L 59/00; G01V 15/00; C08K 3/10; C08K 3/30; C08L 23/00

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: polyoxymethylen, polyacetal, metal stearate, metal particle, polyolefin-based compound, barium sulfate, steric hindrance phenol-based compound, anti oxidant, moldings, detector, stainless steel

**C.    DOCUMENTS CONSIDERED TO BE RELEVANT**

| Category* | Citation of document, with indication, where appropriate, of the relevant passages | Relevant to claim No. |
|---|---|---|
| X | KR 10-2007-0097045 A (E.I. DU PONT DE NEMOURS AND COMPANY) 02 October 2007 See abstract; claims 1-20; and tables 1 and 2. | 1-11 |
| A | KR 20-2013-0007177 U (ILLINOIS TOOL WORKS INC.) 13 December 2013 See abstract; paragraphs [0008] and [0015]-[0022]; and claims 1-20. | 1-11 |
| A | KR 10-2006-0102417 A (KOLON CORPORATION) 27 September 2006 See abstract; examples 1-9; and claims 1-5. | 1-11 |
| A | KR 10-2005-0063178 A (KOREA ENGINEERING PLASTICS CO., LTD.) 28 June 2005 See abstract; paragraphs [0039]-[0042]; and claims 1-5. | 1-11 |
| A | US 6177113 B1 (KRESS, John E. et al.) 23 January 2001 See abstract; column 2, line 7 - column 4, line 40; and example 1. | 1-11 |

☐ Further documents are listed in the continuation of Box C.     ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 27 NOVEMBER 2015 (27.11.2015) | **30 NOVEMBER 2015 (30.11.2015)** |

| Name and mailing address of the ISA/KR | Authorized officer |
|---|---|
| Korean Intellectual Property Office Government Complex-Daejeon, 189 Seonsa-ro, Daejeon 302-701, Republic of Korea | |
| Facsimile No.  82-42-472-7140 | Telephone No. |

Form PCT/ISA/210 (second sheet) (July 2009)

INTERNATIONAL SEARCH REPORT
Information on patent family members

International application No.

**PCT/KR2015/009132**

| Patent document cited in search report | Publication date | Patent family member | Publication date |
|---|---|---|---|
| KR 10-2007-0097045 A | 02/10/2007 | CN 101061178 A | 24/10/2007 |
| | | EP 1828308 A2 | 05/09/2007 |
| | | EP 1828308 B1 | 04/01/2012 |
| | | JP 2008-520816 A | 19/06/2008 |
| | | US 2006-0111473 A1 | 25/05/2006 |
| | | WO 2006-057975 A2 | 01/06/2006 |
| | | WO 2006-057975 A3 | 13/07/2006 |
| KR 20-2013-0007177 U | 13/12/2013 | CA 2831263 A1 | 04/10/2012 |
| | | CN 103517856 A | 15/01/2014 |
| | | EP 2688812 A1 | 29/01/2014 |
| | | KR 10-2015-0046196 A | 29/04/2015 |
| | | US 2012-0241589 A1 | 27/09/2012 |
| | | US 8980982 B2 | 17/03/2015 |
| | | WO 2012-134981 A1 | 04/10/2012 |
| KR 10-2006-0102417 A | 27/09/2006 | NONE | |
| KR 10-2005-0063178 A | 28/06/2005 | CN 1898322 A | 17/01/2007 |
| | | CN 1898322 C | 17/01/2007 |
| | | EP 1706456 A1 | 04/10/2006 |
| | | JP 2007-515539 A | 14/06/2007 |
| | | JP 4401391 B2 | 20/01/2010 |
| | | US 2007-0276070 A1 | 29/11/2007 |
| | | WO 2005-061618 A1 | 07/07/2005 |
| US 6177113 B1 | 23/01/2001 | EP 0729707 A2 | 04/09/1996 |
| | | EP 0729707 A3 | 18/08/1999 |
| | | US 5615559 A | 01/04/1997 |
| | | US 5644926 A | 08/07/1997 |

Form PCT/ISA/210 (patent family annex) (July 2009)

**EP 3 190 154 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6113482 A

- US 6177113 A